# EUROPEAN PATENT APPLICATION

(11) **EP 4 711 136 A1**
(43) Date of publication of application: **18.03.2026**
(21) Application number: 22969914.5
(22) Date of filing: 27.12.2022
(51) Int. Cl.: B41F 33/00, H04N 1/60, B41F 33/16

(54) **METHOD FOR CREATING HALFTONE CONTRACT PROOFS USING PLOTTER PRINT PROOFS WITH A COMBINATION OF HYBRID AND NON-HYBRID SCREENS FOR SUBSEQUENT FLEXOGRAPHIC PRINTING**

(71) Applicant: GRABALFA PRE-PRESS SOLUTIONS, S.L., 46839 GUADASSEQUIES (VALENCIA) (ES)
(72) Inventor: VIDAL MARI, Amado, 46839 Valencia (ES); HERRERO IBÁÑEZ, Santiago, 46839 Valencia (ES); MATEU SOLER, Rubén, 46839 Guadasséquies (Valencia) (ES); REQUENA UREÑA, Sergio, 46839 Valencia (ES); ENGO GARRIDO, Victorio, 46839 Valencia (ES)
(74) Representative: Sahuquillo Huerta, Jesús
(86) International application number: PCT/ES2022/070837
(87) International publication number: WO 2024/141676

(57) **Abstract**

Method for creating halftone contract proofs using plotter print proofs with a combination of hybrid and non-hybrid screens for subsequent flexographic printing, allowing the combination of AM, FM and XM screens without distortion in the test, automating the incorporation of the parameters that define the printing on the plotter and on the different machines on which such printing may be carried out. The procedure consists of fifteen steps in which specific hybrid screens are generated for the plotter test with a compensation curve and minimums different from those used for flexographic printing on clichés, and the dot gain setting in the colour profile is changed, incorporating the information necessary for the automation of the process into the files and into a database in a standardised format.

## Description

### TECHNICAL SECTOR

The present invention falls within the field of the graphic arts industry, specifically in the field of flexographic printing and its associated processes.

### BACKGROUND TO THE INVENTION

Flexography is a direct printing system, in which inks are transferred to a substrate by means of flexible plates with high reliefs, also known as stencils, which are mounted on rollers.

It is a technology that allows printing at high speed and low cost, with its main advantage being the ability to print on different substrates. Flexographic printing is present in various markets and is, today, the most widely used printing system in the packaging industry, on materials as diverse as plastics, cardboard, paper, etc., in all types of formats.

It allows the use of various types of inks, water-based, solvent-based or UV curable inks. In addition to its versatility in materials and inks, as well as its speed, flexographic printing allows a high degree of automation and a low need for machine maintenance.

The printing of the inks on the support through the printing plates is done by means of printing screens, i.e. a set of dots whose density and size determine the different intensity of the colours. There are three types of screens:
- Conventional, amplitude modulated or AM frames: To generate the different tones, the size of the dots varies, but always maintaining the distance between them.
- Stochastic, frequency modulated or FM frames: To generate the different tones, the dots always keep the same size and the distance between them is varied.
- Hybrid, cross modulated or XM frames: These are a cross between AM and FM frames.

AM screens are defined by lineature or line density per centimetre (Ipc) or per inch (Ipi), which is the measurement of the dot grid. The different size of the dots that provides an equivalent percentage of ink is referred to as the dot percentage. If the dots are small, the colour intensity is low, and if the dots are larger, the colours are more intense, so that, as they grow in size, there comes a moment when the dots join together to form a continuous area. They are also characterised by the angles or directions of alignment of the dots in the raster.

In FM frames, the dot size is defined by the diameter of the dot or by its number of pixels and the number of dots per unit area is called the dot percentage.

AM screens are normally used, with FM screens being used to achieve a smoother transition of colour density in gradients and to tone down (make lighter colours) in specific areas, as well as in highlights to reproduce finer details. The dispersion or randomness of the dots in the applied areas creates a more gradual transition from white to print.

Most FM frames only work in the dot percentages below the halftone, and where they start to work depends on the lineature and dot size of the FM frame. At higher percentages (mid and high tones) AM frames are always used. Therefore, a frame set consists of AM frames only, a combination of AM and FM frames, or a combination of AM, XM and FM frames.

Hybrid or XM screens use dots controlled according to the FM screening method, but aligned following the AM screen angles set in the intermediate tones. This allows transitions between AM and FM screens without noticeable intersections between the two types or defects in the gradients. There are a variety of manufacturers with different solutions to make the transition from AM to FM raster.

In reality, the dots on the flexo press are printed larger than those on the cliché. This increase is known as dot gain. In order to compensate for this dot gain with respect to the desired target curve of tonal values, so-called compensation curves are applied during the production of the clichés.

Since the production of printing plates requires a high level of investment, printing tests on inkjet plotters, known as "halftone contract proofs", are often carried out prior to production. In these tests, parameters such as colour, lineature, *trapping* (overlapping of adjacent inks to avoid registration errors during machine movement, plate production and mounting) and angles are simulated in order to assess whether the printing result of the clichés is the desired one in accordance with the graphic design.

Since ink-jet printing technology in a plotter and flexographic printing are different, in order to print the film files (1-bit tiff files, which are used to make the clichés) in the plotter, software is needed to reproduce this simulation, so that the test print resembles the result of flexographic printing using the clichés.

In the case of starting with a new flexo press, the usual procedure for carrying out the test prints is as follows:
1. Design of a test design of a so-called "mechanical" colour, obtaining a file in pdf format, which contains the information on lineatures, angle, dot shapes, types of screens, etc. This file does not have a compensation curve.
2°Creation of raster files or rasterisation through a RIP (Raster Image Processor) application, a process in which the pdf format file is converted into as many 1-bit tiff format files as there are colours in the file.
3°Printing of a test on the flexographic press where the final product will be printed to find out the printing characteristics of the machine, specifically the appropriate lineature, the dot gain for calculating the compensation curve and the appropriate FM screens for the printing done.
4° Creation of a colour design (with the four-colour process colours, i.e. cyan, magenta, yellow and black, or, if it is extended gamut, red, blue and green can be added). The file is rasterised to obtain the 1-bit-per-colour files with the characteristics obtained from the mechanical test (appropriate linearisation, compensation curve, etc.).
5°Printing of a fingerprint in the flexographic printer using specific clichés to obtain the printing colour conditions. This proof is made up of a colour chart to read the colour gamut, a series of images and other elements to optimise the colour profile and to check the correct compensation curve.
6° The colour chart obtained in this test is measured by means of specific software. This software calculates the so-called colour profile, a file that numerically simulates the characteristics and printing conditions and thus the range of colours used in the fingerprint.
7° A colour chart is printed on the inkjet plotter with rasterised (or "ripped") 1 bit tiff files in the RIP application under the same conditions as the fingerprint clichés were made.
8° The colour differences (ΔE) between the fingerprint (target values) or colour chart printed on the flexo press and the colour chart printed on the plotter (actual values) are measured thanks to the calculated colour profile. For example, document ES2834100T3 describes a method for the measurement of the printed colour, with discrimination by threshold of homogeneity of the colour obtained, where the automatic processing eliminates the dependence on the evaluation by an operator.
9°If the results are not satisfactory, the colour profile is recalculated and the colour chart is reprinted in the plotter until the results are as close as possible to those printed on the fingerprint.
10° The colour fingerprint design is printed on the inkjet plotter with 1 bit rasterised (or "ripped") tiff files in the RIP application under the same conditions as the fingerprint clichés were made.
11° The dot gain of the resulting printed proof is visually compared with the flexo printed result. If differences are found, the necessary adjustments are made with the tools available in the software. This step is necessary because the colour chart is only a part of the printed result and, due to tolerances in the printing process, there may be colour differences throughout the finger print.

Currently, following this process, although flexo printing software packages such as *Kodak Colorflow, StudioRIP* or *Agfa Sublima* handle the combination of screens, existing soft proofing software tools such as *GMG Color* do not allow combining the use of AM, FM and XM type screens in the same proof colour profile, and only allow the dot percentage of a screen to be represented. This leads to a distortion of the flexo result in contract proofs on AM screens if FM screens are used in the profile or on FM screens if AM screens are used in the profile.

Therefore, if in the design it is of interest to use FM screens in one colour and AM in others, or, within the same colour, to use FM in some objects and AM in others, it is not possible to do this without distortion in the plotter contract test with the current procedures and applications, as it would be necessary to modify the same dot percentage with two different values in the plotter print tests.

Traditionally, on the other hand, print characteristics and conditions are manually entered by an operator into the RIP application to perform the test on the plotter, which makes the process slow and prone to human error.

It is for all these reasons that there is a need in the market for new procedures in the preparation of plotter printing proofs that allow the combination of AM, FM and XM screens without distortion with respect to the subsequent flexographic printing, automating the incorporation of the parameters that define the printing in plotter and in the different flexographic machines in which this printing can be carried out.

### EXPLANATION OF THE INVENTION

The object of the present invention is to obtain a procedure for making halftone contract proofs by means of plotter printing proofs that allow the combination of AM, FM and XM screens without distortion with respect to the subsequent flexographic printing, automating the incorporation of the parameters that define the plotter printing and in the different flexographic machines in which such printing can be carried out.

Starting from a design in which the combination of AM, FM and XM frames is necessary, the procedure of the present invention follows the following steps:
1. Design of a test design of a so-called mechanical colour, obtaining a file in pdf format, which contains the information on lineatures, angle, dot shapes, types of screens, etc. This file does not have a compensation curve.
2°Creation of raster or rasterisation through a RIP (Raster Image Processor) application, a process in which the pdf format file is converted into as many 1-bit tiff format files as there are colours in the file.
3°Printing a test on the flexographic press where the final product will be printed in order to know the printing characteristics of the machine, specifically the appropriate lineature, the dot gain for the calculation of the compensation curve and the appropriate FM screens for the printing done.
4° Creation of a colour design (with the four-colour process colours, i.e. cyan, magenta, yellow and black, or, if it is extended gamut, red, blue and green can be added). The file is rasterised to obtain the 1-bit-per-colour files with the characteristics obtained from the mechanical test (appropriate linearisation, compensation curve, etc.).
5°Printing a fingerprint on the flexographic printer using specific clichés to obtain the printing colour conditions. This proof is composed of a colour chart to read the colour gamut, a series of images and other elements to optimise the colour profile and to check the correct compensation curve.
6° The colour chart obtained in this test is measured by means of specific software. This software calculates the so-called colour profile, a file that numerically simulates the characteristics and printing conditions and thus the range of colours used in the fingerprint.
7° A colour chart is printed on the inkjet plotter with rasterised (or "ripped") 1 bit tiff files in the RIP application in the same conditions as the clichés for the fingerprint, with the exception of the compensation curve and the minimum point.
8°The colour differences (ΔE) between the fingerprint (target values) or colour chart printed on the flexo press and the colour chart printed on the plotter (actual values) are measured thanks to the calculated colour profile.
9°If the results are not satisfactory, the colour profile is recalculated and the colour chart is reprinted on the plotter until adequate results are obtained, i.e. as close as possible to the result printed on the fingerprint, with the criteria of ΔE average <1 and ΔE individual <5.
10° A control strip is printed on the inkjet plotter to check the dot gain. This strip is made up of various dot percentages and with AM and FM screens, the AM screens being equivalent according to the lineature and curve of the best fingerprint result so that the transition point is the same as in the flexographic printing, and also simulates the dot size taking into account the dot gain in the flexographic printing.
11° The 1 bit rasterised (or "ripped") tiff files are generated in the RIP application with angle and linearity as the fingerprint clichés were made, but with a linear dot gain curve, introducing the minimum dot of 5% for the FM frame and 0.1% for the AM frame, and choosing the XM frame.
12° In the colour profile creation software, in the gain section, the minimum values are adjusted; in the dot percentage of 0.1 %, the dot gain of the AM screen is set and in 5%, the dot gain of the FM screen is set, which has been calculated from the fingerprint.
13° The dot gain of the resulting printed test is measured against the printed result. In the case of differences, the necessary adjustments are made with the tools available in the software.
14° The colour fingerprint design is printed on the inkjet plotter with 1 bit tiff files rasterised (or "ripped") in the RIP application with the fingerprint lineature and angles and the rest of the parameters as in step 11°.
15° The resulting printed proof is visually compared with the printed result. If differences are found, the necessary adjustments are made with the tools available in the programme. This step is necessary as the colour chart is only a part of the printout and due to tolerances in the printing process there may be colour differences in the entire fingerprint printout.

To support this procedure, modifications are made to the raster tiff files, incorporating the following parameters in a standardised way in the pdf file to be ripped: minimum AM point, minimum FM point, Ipi, angles, AM raster, FM raster. The RIP application takes these parameters from the pdf file and the compensation curve from the production programme.

In addition, tables are created in which the percentage corresponding to the transition point used in the plotter printing test and in flexographic printing is normalised according to the lineature, the dot size of the FM screen and the dot gain curve, incorporating these tables, as well as the parameters that define the different flexographic machines, into a database that allows this information to be automatically incorporated into the ripped tiff files.

With all this, it is possible to produce plotter printing proofs that allow the combination of AM, FM and XM screens without distortion with respect to the subsequent flexographic printing, automating the incorporation of the parameters that define plotter printing and in the different flexographic machines in which this printing can be carried out.

Throughout the description and the claims, the word "comprises" and variants thereof are not intended to exclude other technical features, components or steps. To those skilled in the art, other objects, advantages and features of the invention will be apparent in part from the invention and in part from the practice of the invention. The following examples and drawings are provided by way of illustration and are not intended to restrict the present invention. Furthermore, the invention covers all possible combinations of particular and preferred embodiments indicated herein.

### BRIEF DESCRIPTION OF THE DRAWINGS

In order to complement the description herein and to assist in a better understanding of the features of the invention, a set of drawings is attached hereto as an integral part of the said description, in which the following is illustratively and non-limitingly depicted:

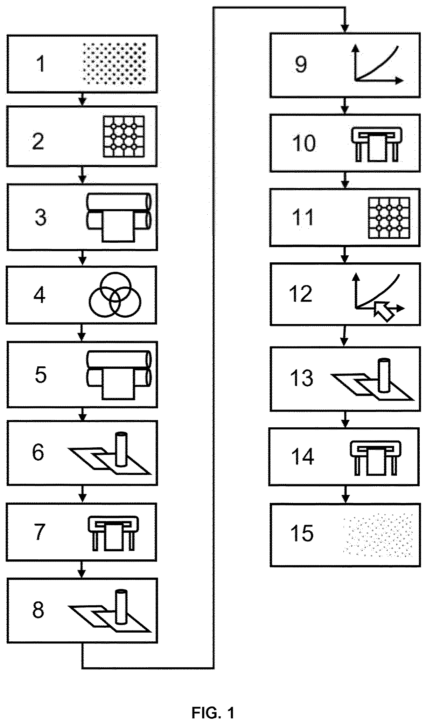

Figure 1 shows a flow chart of a preferred embodiment of the method for creating halftone contract proofs using plotter print proofs with a combination of hybrid and non-hybrid screens for subsequent flexographic printing which is the subject of the present invention.

### PREFERRED EMBODIMENT OF THE INVENTION

Using the numbering adopted in Figure 1 of the present document to identify the stages comprising the method for creating halftone contract proofs using plotter print proofs with a combination of hybrid and non-hybrid screens for subsequent flexographic printing which is the subject of the present invention, a description of these stages is given for a preferred embodiment of the invention.

In a preferred embodiment of the invention, starting from a design in which the combination of AM, FM and XM frames is necessary, the procedure of the present invention has the following steps:
i. 1st Step (1): Making a design of a test of a colour called mechanical, obtaining a file in pdf format, which contains the information of lineatures, angle, shapes of the dot, types of screens, etc. This file does not have a compensation curve.
ii. 2nd Step (2): Creation of raster files or rasterisation through a RIP (Raster Image Processor) application, a process in which the pdf format file is converted into as many 1-bit tiff format files as there are colours in the file.
iii. 3rd Step (3): Printing a test on the flexographic printing press where the final product will be printed in order to know the printing characteristics of the machine, in particular the appropriate lineature, the dot gain for the calculation of the compensation curve and the appropriate FM screens for the printing done.
iv. 4th Step (4): Creation of a colour design (with the four-colour process colours, i.e. cyan, magenta, yellow and black, or, if it is an extended gamut, red, blue and green can be added). The file is rasterised to obtain the 1-bit-per-colour files with the characteristics obtained from the mechanical test (appropriate linearisation, compensation curve, etc.).
v. 5th Step (5): Printing a fingerprint on the flexographic printing press using specific clichés to obtain the printing colour conditions. This proof is composed of a colour chart to read the colour gamut, a series of images and other elements to optimise the colour profile and to check the correct compensation curve.
vi. 6th Step (6): The colour chart obtained in this test is measured by means of specific software. This software calculates the so-called colour profile, a file that numerically simulates the printing characteristics and conditions and thus the colour gamut used in the fingerprint.
vii. 7th Step (7): A colour chart is printed on the inkjet plotter with rasterised (or "ripped") 1 bit tiff files in the RIP application under the same conditions as the fingerprint clichés, except for the compensation curve and the minimum dot.
viii. 8th Step (8): The colour differences (ΔE) between the fingerprint (target values) or colour chart printed on the flexo press and the colour chart printed on the plotter (actual values) are measured thanks to the calculated colour profile.
ix. 9th Step (9): If the results are not satisfactory, the colour profile is recalculated and the colour chart is reprinted on the plotter until adequate results are obtained, i.e. as close as possible to the result printed on the fingerprint, with the criteria of average ΔE <1 and individual ΔE <5.
x. 10th Step (10): A control strip is printed on the inkjet plotter to check the dot gain. This strip is made up of various dot percentages and AM and FM screens, the AM screens being equivalent according to the lineature and curve of the best fingerprint result so that the transition point is the same as in the flexo print, and also simulates the dot size taking into account the dot gain in the flexo print.
xi. 11th Step (11): 1 bit rasterised (or "ripped") tiff files are generated in the RIP application with angle and lineature as the fingerprint clichés were made, but with a linear dot gain curve, entering the minimum dot of 5% for the FM frame and 0.1% for the AM frame, and choosing the XM frame.
xii. 12th Step (12): In the colour profile creation software, in the gain section, the minimum values are adjusted; in the dot percentage of 0.1% the dot gain of the AM screen is set and in 5% the dot gain of the FM screen, which has been calculated from the fingerprint, is set.
xiii. 13th Step (13): The dot gain of the resulting test printout is measured against the printed result. If differences are found, the necessary adjustments are made with the tools available in the software.
xiv. 14th Step (14): The colour fingerprint design is printed on the inkjet plotter with rasterised (or "ripped") 1 bit tiff files in the RIP application with fingerprint lineature and angles and all other parameters as in step 11.
xv. 15th Step (15): Visually compare the resulting printed proof with the printed result. If differences are found, the necessary adjustments are made with the tools available in the programme. This step is necessary because the colour chart is only a part of the printout and due to tolerances in the printing process there may be colour differences in the whole fingerprint printout.

To support this procedure, in a preferred embodiment, modifications are made to the raster tiff files, incorporating the following parameters in a standardised way in the pdf file to be ripped: minimum AM point, minimum FM point, Ipi, angles, AM raster, FM raster. The RIP application takes these parameters from the pdf file and the compensation curve from the production programme.

In addition, tables are created in which the percentage corresponding to the transition point used in the test printing by plotter and in the flexographic printing is normalised according to the lineature, the dot size of the FM screen and the dot gain curve, incorporating these tables, as well as the parameters that define the different flexographic machines, into a database that allows this information to be incorporated in an automated way into the ripped tiff files.

## Claims

1. Method for creating halftone contract proofs using plotter print proofs with a combination of hybrid and non-hybrid screens for subsequent flexographic printing of a design requiring amplitude modulated or AM screens, frequency modulated or FM screens and hybrid or XM screens, **characterised in that** it consists of the following steps:
i. 1st Step (1): Making a test design of a so-called mechanical colour, obtaining a file in pdf format, which contains the information on lineature, angle, dot shapes, types of screens, etc., this file does not contain a compensation curve.
ii. 2nd Step (2): Creation of raster files or rasterisation through a RIP (Raster Image Processor) application, a process in which the pdf format file is converted into as many 1-bit tiff format files as there are colours in the file.
iii. 3rd step (3): Printing a test on the flexographic press where the final product will be printed in order to know the printing characteristics of the machine, in particular the appropriate lineature, the dot gain for the calculation of the compensation curve and the appropriate FM screens for the printing done.
iv. 4th Step (4): Creation of a colour design (with the four-colour process colours, i.e. cyan, magenta, yellow and black, or, if it is extended gamut, red, blue and green can be added); the file is rasterised to obtain the 1-bit files per colour with the characteristics obtained from the mechanical test (appropriate linearity, compensation curve, etc.).
v. 5th Step (5): Printing of a fingerprint in the flexographic printer using specific clichés to obtain the printing colour conditions. This test consists of a colour chart to read the colour gamut, a series of images and other elements to optimise the colour profile and to check the correct compensation curve.
vi. 6th Step (6): The colour chart obtained in this test is measured by means of specific software, which calculates the so-called colour profile, a file that numerically simulates the printing characteristics and conditions and thus the range of colours used in the fingerprint.
vii. 7th Step (7): A colour chart is printed on the inkjet plotter with rasterised (or "ripped") 1 bit tiff files in the RIP application under the same conditions as the fingerprint clichés were made, except for the compensation curve and the minimum point.
viii. 8th Step (8): The colour differences (ΔE) between the fingerprint (target values) or colour chart printed on the flexo press and the colour chart printed on the plotter (actual values) are measured thanks to the calculated colour profile.
ix. 9th Step (9): If the results are not satisfactory, the colour profile is recalculated and the colour chart is reprinted on the plotter until adequate results are obtained, i.e. as close as possible to the result printed on the fingerprint, with the criteria of average ΔE <1 and individual ΔE <5.
x. 10th Step (10): A control strip is printed on the inkjet plotter to check the dot gain, this strip being composed of various dot percentages and with AM and FM screens, the AM screens being equivalent according to the lineature and curve of the best fingerprint result so that the transition point is the same as in the flexographic printing, and also simulates the dot size taking into account the dot gain in the flexographic printing.
xi. 11th Step (11): 1 bit rasterised (or "ripped") tiff files are generated in the RIP application with angle and lineature as the fingerprint clichés were made, but with a linear dot gain curve, entering the minimum dot of 5% for the FM frame and 0.1% for the AM frame, and choosing the XM frame.
xii. 12th Step (12): In the colour profile creation software, in the gain section, the minimum values are adjusted; in the dot percentage of 0.1% the dot gain of the AM screen is set and in 5% the dot gain of the FM screen, which has been calculated from the fingerprint, is set.
xiii. 13th Step (13): The dot gain of the resulting test printout is measured against the printed result. If differences are found, the necessary adjustments are made with the tools available in the software.
xiv. 14th Step (14): The colour fingerprint design is printed on the inkjet plotter with rasterised (or "ripped") 1 bit tiff files in the RIP application with fingerprint lineature and angles and all other parameters as in step 11.
xv. 15th Step (15): The resulting printed proof is visually compared with the printed result and, in case of differences, the necessary adjustments are made with the tools available in the programme. This step is necessary because the colour chart is only a part of the printout and due to tolerances in the printing process there may be colour differences in the whole fingerprint printout.

2. Method for creating halftone contract proofs using plotter print proofs with a combination of hybrid and non-hybrid screens for subsequent flexographic printing according to claim 1 wherein modifications are made to the raster tiff files, incorporating the following parameters in a standardised manner in the pdf file to be ripped: minimum AM dot, minimum FM dot, Ipi, angles, AM screen, FM screen, compensation curve, with the RIP application taking these parameters from the pdf file and the compensation curve from the production programme.

3. Method for creating halftone contract proofs using plotter print proofs with a combination of hybrid and non-hybrid screens for subsequent flexographic printing according to claim 2 wherein tables are created in which the percentage corresponding to the transition point in the plotter printing proof and in the flexographic printing is normalised according to the lineature and the dot size of the FM screen used and the compensation curve, incorporating these tables, as well as the parameters that define the different flexographic machines, into a database that allows this information to be automatically incorporated into the tiff files through the RIP.
